# EUROPÄISCHE PATENTSCHRIFT

(11) **EP 1 793 222 B1**
(45) Veröffentlichungstag und Bekanntmachung des Hinweises auf die Patenterteilung: **20.07.2011**
(21) Anmeldenummer: 06021923.5
(22) Anmeldetag: 19.10.2006
(51) Int. Cl.: G01N 21/90

(54) **Inspektionsmaschine**
Inspection machine
Machine d'inspection

(30) Priorität: 02.12.2005 DE 102005057872
(43) Veröffentlichungstag der Anmeldung: 06.06.2007
(73) Patentinhaber: Krones AG, 93073 Neutraubling (DE)
(72) Erfinder: Lindner, Peter, 93437 Furth im Wald (DE); Pöppel, Walter, 93095 Hagelstadt (DE)
(74) Vertreter: Grünecker, Kinkeldey, Stockmair & Schwanhäusser Anwaltssozietät

(56) Entgegenhaltungen:
- JP-A- 2005 017 004
- US-A- 3 727 068
- US-A- 3 746 165
- US-A- 4 055 252
- US-A1- 2003 210 397
- US-B1- 6 473 169

## Beschreibung

Die Erfindung betrifft eine Inspektionsmaschine der im Oberbegriff des Patentanspruchs 1 angegebenen Art.

Die aus US 3746165 A bekannte Inspektionsmaschine weist eine langsam drehangetriebene und lichtdurchlässige Scheibe auf, unter der eine Lichtquelle angeordnet ist. Die vom Zuförderer aneinander stehend angelieferten Gefäße werden aneinander stehend an die Scheibe übergeben und aneinander stehend und mit gegenseitigem Druck auf der Oberfläche der Scheibe zwischen Innen und Außenführungen zum Abförderer geschoben, während die durchleuchtete Gefäßbasis von oben inspiziert wird.

Die aus US 3727068 A bekannte Inspektionsmaschine weist eine langsam drehangetriebene und lichtdurchlässige Scheibe auf, unter der eine Lichtquelle angeordnet ist. Die vom Zuförderer aneinander stehend angelieferten Gefäße werden aneinander stehend an die Scheibe übergeben und aneinander stehend und mit gegenseitigem Druck auf der Oberfläche der Scheibe zwischen Innen und Außenführungen zum Abförderer geschoben, während die durchleuchtete Gefäßbasis von oben inspiziert wird. Zur Inspektion wird eine integrierte Fotozellenanordnung benutzt. Auch eine Seitenwandinspektion wird erwähnt, wobei jedoch eine Seitenwandinspektion mit aneinander stehenden und gegenseitig Druck ausübenden Gefäßen unzuverlässig ist.

Die aus US 2003/210397 A1 (ähnlich der aus JP 2005 017004 A) bekannte Inspektionsmaschine jedoch für vollständig gefüllte Flaschen weist als Transporteur eine mit hoher Geschwindigkeit angetriebene Sternradplatte auf. Die Sternradplatte hat in Drehrichtung mit Zwischenabständen regelmäßig verteilte Montiersektionen zum Draufstellen jeweils einer Flasche, die durch einen lichtdurchlässigen Klemmring von oben auf der Montiersektion fixiert wird. Der Linearzuförderer liefert die Gefäße bereits separiert mit Zwischenabständen in Taschen eines Übergabesterns, der die Flaschen separiert auf die Montiersektionen der Sternradplatte bringt. Die Zwischenabstände zwischen den Flaschen werden entsprechend der Teilung der Montiersektionen bereits im Zuförderer eingestellt.

Die aus US 6473169 B1 bekannte Inspektionsmaschine wird so betrieben, dass zwischen den zu inspizierenden Gefäßen bereits im Zuförderer durch eine Separierschnecke Zwischenabstände entsprechend der Teilung von Taschen der Ein- und Auslaufsterne und eines Hauptdrehtisches eingestellt werden.

Die aus EP 0 894 544 A bekannte Inspektionsmaschine weist als Transporteur ein Sternrad auf, das umfangsseitig mit Klammerngreifern bestückt ist. Jeder Klammergreifer ergreift ein Gefäß etwa in halber Höhe von zwei Seiten und transportiert das Gefäß entlang des Bogenpfades vorbei an einer Inspektionseinrichtung. Die Klammergreifer transportieren die Gefäße bodenfrei. Bei einer dem Bogenpfad zugeordneten Bodeninspektionseinrichtung ist eine stationäre Schutz- bzw. Streuscheibe im Abstand unterhalb des Bodens des darüber hinwegfahrenden Gefäßes stationär angeordnet, die von unten durch die Beleuchtungseinrichtung durchleuchtet wird. Der mechanische Aufwand zum Klammern und bodenfreien Transportieren der Gefäße, insbesondere Flaschen, durch die Inspektionsmaschine ist außerordentlich hoch. Ferner muss gegebenenfalls für eine andere Flaschengröße die Bestückung der Klammergreifer umgerüstet werden. Für die Klammergreifer sind Steuerungen beim Sternrad vorgesehen, die den baulichen Aufwand weiter erhöhen.

Bei der aus DE 29 04 126 A bekannten Inspektionsmaschine für Flaschen umfasst der Transporteur ein Sternrad, das jede Flasche am Flaschenhals und zusätzlich tiefer im Bereich der Seitenwand ergreift. Ferner sind in unterschiedlichen Höhen Führungsbögen für die Flaschen vorgesehen. Jede Flasche wird bodenfrei oberhalb einer Schutz- oder Streuscheibe aus Glas transportiert, die von unten her durch die Beleuchtungseinrichtung durchleuchtet wird. Die Scheibe ist drehbar, um in einer Reinigungsstation periodisch oder nach Bedarf gereinigt zu werden. Der mechanische Aufwand für den Transport und die Positionierung der Flaschen ist hoch. Bei Umstellungen auf andere Flaschengrößen sind zeit- und arbeitsintensive Umrüstarbeiten erforderlich.

Bei der aus DE 297 07 734 U bekannten Inspektionsmaschine weist der Transporteur eine drehantreibbare Scheibe mit Sauglöchern auf, in deren Bereichen durch Unterdruckbeaufschlagung die als Dosen ausgebildeten Behälter fixiert werden. Die jeweilige Beleuchtungseinrichtung ist im Gehäuse einer Kamera einer Inspektionseinrichtung oberhalb der Scheibe untergebracht. Inspiziert werden das Innere, der Bördelrand und die Seitenwand jeder Dose. Die aus DE 196 24 552 A bekannte Inspektionsmaschine ist zwischen unter annähernd 90° zueinander ausgerichteten Zu- und Abförderern angeordnet, wobei der Transporteur zumindest entlang des Bogenpfades innen- und außenseitige Riementriebe aufweist. Jede Flasche wird im Seitenwandbereich von zwei Seiten geklemmt und bodenfrei transportiert. In einer Boden-Inspektionseinrichtung ist eine Kamera oberhalb der Flaschenmündung vorgesehen, während auf die Kamera ausgerichtet unterhalb des Bogenpfades eine stationäre Beleuchtungseinrichtung stationär angeordnet ist. Der mechanische Aufwand zum Transportieren der Flaschen ist hoch. Eine Umstellung auf eine andere Flaschengrößen erfordert zeit- und arbeitsintensive Umrüstarbeiten.

Der Erfindung liegt die Aufgabe zugrunde, eine baulich einfache und kostengünstige, jedoch sehr funktionssichere Inspektionsmaschine anzugeben.

Die gestellte Aufgabe wird mit den Merkmalen des Patentanspruchs 1 gelöst.

Da die Gefäße direkt auf der Scheibe des Transporteurs stehend entlang des Bogenpfades und vorbei an der zumindest einen Inspektionseinrichtung transportiert werden, entfallen mechanisch aufwendige Transporteinrichtungen und lassen sich verschiedene Gefäßgrößen und Konfigurationen in der Inspektionsmaschine ohne oder nur mit vernachlässigbaren Umrüstarbeiten behandeln. Da die Scheibe zumindest bereichsweise lichtdurchlässig ausgebildet ist, werden die Gefäße bei der zumindest einen Inspektionseinrichtung so von unten durch die Scheibe beleuchtet, dass die Inspektion mit hoher Zuverlässigkeit durchführbar ist. Ein Halten der Gefäße während des Transports ist nicht erforderlich, und auch kein bodenfreier Transport, was den mechanischen Bauaufwand der Inspektionsmaschine vereinfacht, so dass eine zuverlässige, aber kostengünstige Inspektionsmaschine gegeben ist. Die Scheibe kann schneller angetrieben werden als ein Zuförderer, so dass die Gefäße bereits durch Reibkontakt mit der Oberseite der Scheibe für die Inspektion(en) voneinander separiert werden. Dabei werden die Gefäße jedoch nicht nur von der drehantreibbaren Scheibe transportiert, sondern es ist zusätzlich zur Scheibe ein Druckabbau-Sternrad vorgesehen. Dieses Sternrad ist baulich einfach, da es nur eine Mitnehmerwirkung auf die auf der Scheibe stehende Gefäße auszuüben hat, hingegen keine Höhenpositionierung vorzunehmen braucht. Das Druckabbausternrad separiert die anein-anderstehend zugeförderten Gefäße zumindest entlang des Bogenpfades voneinander, um die Inspektion zu unterstützen und, z.B. zur Seiten- bzw. Innenwandinspektion hochwertige Inspektionsresultate sicherzustellen.

Günstig schieben sich die Mitnehmer des Druckabbausternrades bei der Übergabe in etwa auf der Höhe des Gefäßschwerpunktes oder darunter zwischen die aneinander stehenden Gefäße und separieren diese damit voneinander. Es werden die Gefäße voneinander beabstandet entlang des Bogenpfades transportiert, um auch eine Inspektion vornehmen zu können, bei der ein direkter Kontakt zwischen den Gefäßen stören würde, z.B. eine Seitenwandinspektion.

Zweckmäßig ist der Außendurchmesser der Scheibe größer als der wirksame Außendurchmesser des Sternrades. Auf diese Weise wird von vorn herein ein in Radialrichtung der Scheibe relativ breit bemessener Bogenpfad für die Gefäße geschaffen, der es ermöglicht, ohne oder nur nach geringfügigen Umrüstarbeiten unterschiedliche Gefäßgrößen oder Formen zu verarbeiten. Allenfalls muss die zugeordnete Inspektionseinrichtung u.U. radial nachjustiert werden, beispielsweise falls sie auf das Zentrum oder die Achse des Gefäßes auszurichten ist.

Bei einer zweckmäßigen Ausführungsform sind der Zuförderer und ein Abförderer um etwa 180° zueinander versetzt, so dass ein 180° Bogenpfad geschaffen wird, entlang dessen gegebenenfalls mehrere Inspektionen unterschiedlicher Natur durchführbar sind.

Bei einer zweckmäßigen Ausführungsform besteht die Scheibe bzw. der lichtdurchlässige Bereich der Scheibe aus Glas und/oder einem Kunststoff, wie PE. Hierbei kann es sich um klares (transparentes) oder lichtstreuendes (semitransparentes) Material handeln, wobei zweckmäßig die Oberseite der Scheibe oder des lichtdurchlässigen Bereichs der Scheibe sehr widerstandsfähig gegen Abrasion oder sogar abriebfest (Oberflächenbeschichtung oder mit erneuerbarer Schutzfolie) ausgerüstet sein kann.

Bei einer zweckmäßigen Ausführungsform wird der Transporteur entweder kontinuierlich oder intermittierend drehangetrieben. Bei kontinuierlichem Transport wird die jeweilige Inspektionseinrichtung exakt getriggert, wenn sich das Gefäß in der richtigen Position für die Inspektion befindet. Bei intermittierendem Betrieb hält das Gefäß in exakter Positionierung vor der Inspektionseinrichtung an, wodurch für die Inspektion mehr Zeit zur Verfügung steht. Bei einer zweckmäßigen Ausführungsform ist eine Inspektionseinrichtung eine die Beleuchtung von unten nutzende Boden-Inspektionseinrichtung, die die Qualität (Beschädigungsfreiheit) und/oder Sauberkeit des Bodens des Gefäßes, z.B. einer Flasche, inspiziert. Hierzu wird eine oberhalb des Gefäßendes platzierte Kamera benutzt.

Bei einer anderen, zweckmäßigen Ausführungsform ist entweder eine Gefäßinnenwand-Inspektionsvorrichtung und/oder eine Gewindeinspektionseinrichtung und/oder ein Laugendetektor und/oder eine Mündungsdichtflächen-Inspektionseinrichtung und/oder eine Tragring-Inspektionseinrichtung in die Inspektionsmaschine integriert. Auf diese Weise lassen sich an jedem Gefäß nacheinander oder teilweise zeitgleich mehrere Inspektionen vornehmen, deren Gesamtresultat ausgewertet und so berücksichtigt wird, dass als fehlerhaft oder verschmutzt inspizierte Gefäße nachfolgend ausgesondert werden können.

Bei einer anderen Ausführungsform können zusätzlich zu der von unten durch die Scheibe beleuchtenden Beleuchtungseinrichtung gegebenenfalls auch oberhalb der Scheibe weitere Beleuchtungseinrichtungen vorgesehen sein, um noch bessere Inspektionsergebnisse erzielen zu können.

Bei einer vorteilhaften Ausführungsform ist zumindest entlang des Bogenpfades eine Außenführung für die Gefäße vorgesehen, so dass trotz relativ hoher Transportgeschwindigkeit diese nicht abwandern oder kippen. Gegebenenfalls muss bei Umstellung auf eine Gefäßgröße und/oder -form die Außenführung nachjustiert oder gewechselt werden. Grundsätzlich kann die Außenführung jedoch so ausgebildet und angeordnet sein, dass sich damit von sich aus unterschiedliche Gefäßgrößen und/oder -formen ohne Umrüstung verarbeiten lassen.

Nach einem weiteren, wichtigen Gedanken werden die Gefäße mittels des Transporteurs relativ zur Scheibe verschoben und/oder verdreht. Das lichtdurchlässige Material der Scheibe ist zweckmäßig so gewählt, dass es keinem spürbaren Verschleiß durch diese Relativbewegungen unterliegt. So zeigt sich beispielsweise eine vollständig oder zum Teil aus PE bestehende Scheibe als sehr zweckmäßig und unterliegt diese selbst nach längerem Transport leerer Flaschen aus Glas oder PET keinen nennenswerten Verschleiß. Diese Verschleißfestigkeit, die eine gleichmäßige Ausleuchtung der Gefäße sicherstellt, ließe es sogar zu, nur das Sternrad mit der tatsächlichen Transportgeschwindigkeit anzutreiben und die Gefäße auf der Oberseite der stationären oder langsamer laufenden Scheibe entlang des Bogenpfades zu schieben, und gegebenenfalls zu verdrehen.

Selbst wenn die Scheibe synchron mit dem Sternrad umläuft, treten solche Relativbewegungen zwischen den Gefäßen und der Scheibe dann auf, wenn die Gefäße bewusst zu Inspektionszwecken gedreht werden sollten, und auch oder zumindest bei der Übergabe vom Zuförderer und der Abgabe zum Abförderer. Diese Relativbewegungen ergeben sich zwangsweise aufgrund der Einfachheit des Transporteurs, haben aber wegen der Abriebfestigkeit der Scheibe selbst auf Dauer keinen negativen Einfluss auf das Inspektionsergebnis.

Bei einer weiteren Ausführungsform ist, vorzugsweise im Bereich des Abförderers, eine Wand-Mehrfachinspektionsstation vorgesehen. Diese Station nutzt die vom Transporteur auf der Scheibe vorgenommene Beabstandung zwischen den Gefäßen, um die Gefäße einzeln und gegebenenfalls mehrfach im Bereich der Seitenwand aus umfänglich verschiedenen Richtungen zu inspizieren, z.B. mit einer Art Spiegelkabinett.

Um bei der Inspektion als fehlerhaft und/oder verschmutzt erkannte Gefäße aussondern zu können, ist, vorzugsweise, im Bereich des Abförderers, eine Aussonderungsstation vorgesehen.

Die Inspektionsmaschine ist ohne Einschränkung für alle in der Praxis vorkommenden Förderleistungen nutzbar, jedoch besonders bevorzugt für mittlere Förderleistungen bis etwa 8.000 Gefäße/Stunde. Dabei sollte es sich bei den Gefäßen um Flaschen aus Glas oder Kunststoff handeln, und sollten leere Gefäße inspiziert werden. Dann ist eine lange Standzeit der Scheibe mit im Wesentlichen gleichbleibenden optischen Eigenschaften gewährleistet. Im übrigen könnte der Scheibe oder den lichtdurchlässigen Bereich der Scheibe an geeigneter Position der Maschine eine Reinigungsvorrichtung zugeordnet sein, um periodisch oder nach Bedarf Reinigungsvorgänge durchzuführen. Dafür bräuchte die Scheibe nicht angehalten zu werden.

Eine Ausführungsform des Erfindungsgegenstandes wird anhand der Zeichnungen erläutert. Es zeigen:
- Fig. 1: eine Schemadraufsicht auf eine Inspektionsmaschine, und
- Fig. 2: eine Seitenansicht, beispielsweise in der Ebene II-II in Fig. 1.

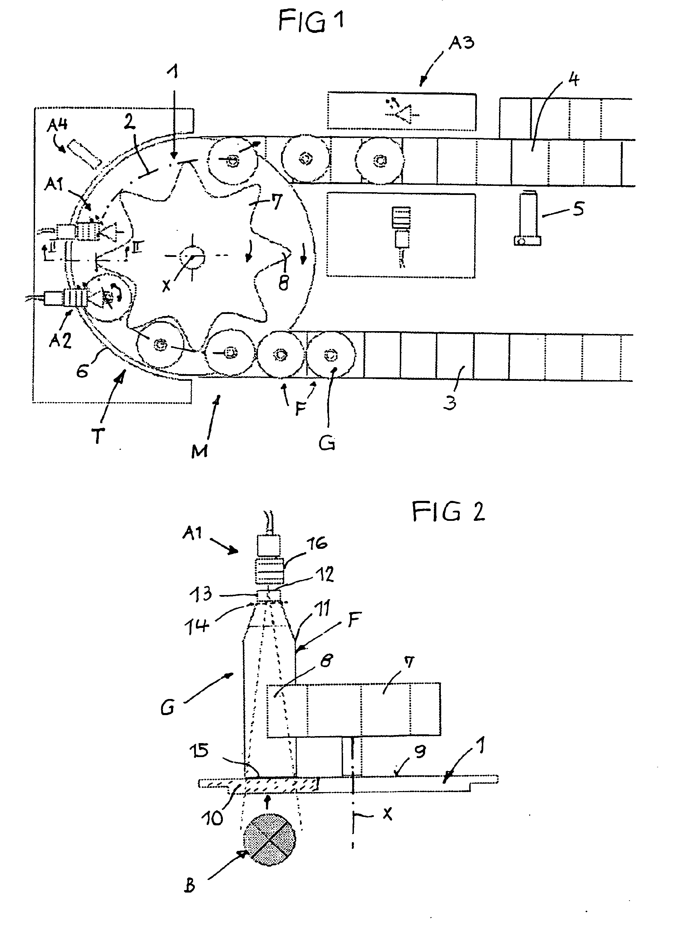

Eine in Fig. 1 in einer schematischen Draufsicht gezeigte Inspektionsmaschine M zum Prüfen von Gefäßen G, insbesondere Flaschen F, beispielsweise aus Glas oder Kunststoff (PET), beispielsweise auf Beschädigungen und/oder Verunreinigungen, umfasst einen Transporteur T, mit dem die Gefäße G in einem etwa 180° überspannenden Halbkreis kontinuierlich oder intermittierend gefördert und dabei inspiziert werden. Der Transporteur T umfasst in einer einfachen Ausführungsform der Inspektionsmaschine M (nicht gezeigt) nur eine um eine Achse X drehbar angetriebene, im Wesentlichen kreisrunde Scheibe 1, auf deren Oberseite 9 (Fig. 2) die voneinander beabstandeten Gefäße G stehend entlang eines Bogenpfades 2 an zumindest einer oberhalb der Scheibe platzierten Inspektionseinrichtung A1, A2, A4 vorbeigefördert und dabei inspiziert werden. Die Gefäße werden unter Nutzen der Schwerkraft und durch Reibungskräfte von der Scheibe 1 mitgenommen und dabei voneinander beabstandet. Die Gefäße werden mit einem Zuförderer 3, z.B. aneinander anstehend, an die Scheibe 1 übergeben und von dieser nach Durchlaufen des Bogenpfades 2 an einen Abförderer 4 übergeben, der die Gefäße G zunächst wie von der Scheibe 1 beabstandet abführt. Die Scheibe 1 ist horizontal ausgerichtet gelagert. Zumindest entlang des Bogenpfades 2 ist eine Außenführung 6 vorgesehen, die beispielsweise am Rand der Scheibe 1 positioniert ist, oder sich gegebenenfalls (nicht gezeigt) mit dem Rand der Scheibe 1 überlappt.

Die Scheibe besteht entweder zur Gänze aus einem lichtdurchlässigen Material oder zumindest in einem Bereich, der dem Bogenpfad 2 zugeordnet ist. Unterhalb der Scheibe 1 ist eine Beleuchtungseinrichtung B vorgesehen (z.B. stationär), die von unten nach oben durch die Scheibe 1 jedes Gefäß G beleuchtet, so dass die zugeordnete Inspektionseinrichtung mit Hilfe der Beleuchtung die Inspektion durchführen kann. Die Scheibe 1 bzw. der lichtdurchlässige Bereich 10 (Fig. 2) besteht aus Glas und/oder einem lichtdurchlässig eingestellten Kunststoff, wie PE. Die Scheibe 1 wird entweder von unten oder von oben und von innen oder von außen um die Achse X drehangetrieben, z.B. einem drehzahlregelbaren Motor.

Die Gefäße G sind beispielsweise, wie erwähnt, Flaschen F aus Glas oder Kunststoff (PET) und weisen jeweils eine Seitenwand 11, eine Mündung 12, gegebenenfalls ein Gewinde 13 und gegebenenfalls einen Haltering 14 auf. Die Flaschen F stehen mit ihrem Boden 15 direkt auf der Oberseite 9 der Scheibe 1 exzentrisch zu deren Achse X. Falls gefüllte Flaschen F zu inspizieren sind, kann auf der Mündung 12 auch ggf. bereits ein Verschluss angebracht sein.

Die in Fig. 1 (und Fig. 2) angedeutete Inspektionseinrichtung A1 ist eine Bodeninspektionseinrichtung, die mit einer oberhalb der Mündung 12 positionierten digitalen (CCD-) Kamera den durchleuchteten Boden 15 inspiziert. In Bewegungsrichtung entlang des Bogenpfades 2 kann eine weitere Inspektionseinrichtung A2 zum Inspizieren der Seitenwand bzw. Innenwand, der Schulterfläche oder der Mündung bzw. Mündungsdichtfläche dienen. Diese Inspektionseinrichtungen sind gegebenenfalls nur optional vorhanden bzw. es können u.U. auch in Verbindung mit A1 derartige Inspektionsaufgaben erfolgen. Eine in Transportrichtung hinter der Inspektionseinrichtung A1 platzierte Inspektionseinrichtung A4 kann optional ein sogenannter Laugendetektor sein, der auf das Vorhandensein einer von einem vorhergehenden Reinigungsprozess stammenden Laugenmenge anspricht. Ferner ist bei der gezeigten Ausführungsform, gegebenenfalls als Option, im Bereich des Abförderers 4 eine weitere Inspektions-Station A3 vorgesehen, die eine Seitenwand-Mehrfachinspektion, beispielsweise mit Hilfe einer Kamera und erforderlichenfalls einer Art Spiegelkabinett, vornimmt.

Bei der in den Fig. 1 und 2 gezeigten Ausführungsform der Inspektionsmaschine M ist als weiterer Teil des Transporteurs T ein zur Achse X koaxiales und zweckmäßig synchron mit der Scheibe 1 drehangetriebenes Sternrad 7 vorgesehen, das bei der Positionierung der Gefäße entlang des Bogenpfades 2 assistiert. Beispielsweise weist das Sternrad 7 nach außen greifende Mitnehmer 8 auf, die zwischen die Gefäße G eingreifen. Das Sternrad 7 kann bei dieser Ausführungsform ein sogenanntes Druckabbau-Sternrad sein, das die im Zuförderer 3 aneinander anstehend zugeförderten Gefäße voneinander separiert, so dass sie gegenseitig keinen Druck ausüben und Zwischenräume vorliegen, die für einwandfreie Inspektionen von Vorteil sind. Der Wirkaußendurchmesser des Sternrades 7 ist kleiner als der Wirkaußendurchmesser der Scheibe 1, so dass ein relativ breiter Bogenpfad 2 vorliegt, in welchem Gefäße unterschiedlicher Größen und/oder Formen ohne nennenswerte Umrüstarbeiten inspiziert werden können. Gegebenenfalls werden die Gefäße G (angedeutet durch einen Doppelpfeil) während des Transportes entlang des Bogenpfades 2 um ihre Achse gedreht.

Zumindest bei der Übergabe vom Zuförderer 3 auf die Scheibe 1 und bei der Übergabe von der Scheibe 1 auf den Abförderer 4 werden die Gefäße auch relativ zur Scheibe 1 geschoben.

Speziell bei der Inspektion leerer Gefäße, insbesondere Flaschen F, zeigt sich, dass die Abriebfestigkeit der beschriebenen Materialien für die Scheibe bzw. deren lichtdurchlässigen Bereich 10 durch die Gefäße G keinem spürbaren Verschleiß unterliegt, der die optischen Eigenschaften beeinträchtigen könnten, die für eine gleichbleibende Beleuchtung wichtig sind. Aus diesem Grund ist es sogar denkbar, bei der Ausführungsform in den Fig. 1 und 2 die Scheibe 1 stationär anzuordnen, und die Gefäße G nur mittels des Drehsterns 7 auf der Oberseite 9 der Scheibe 1 zu schieben. Das Sternrad 7 bzw. dessen Mitnehmer 8 greifen an den Gefäßen G zweckmäßig etwa in Höhe des Gefäßschwerpunkts oder darunter an. Falls die Scheibe 1 stationär sein sollte, würde es ausreichen, nur einen Umfangsabschnitt aus dem lichtdurchlässigen Material auszubilden, beispielsweise nur den der Inspektionseinrichtung A1 zugeordneten Umfangsabschnitt der Scheibe.

Die Inspektionsmaschine M zeichnet sich vor allem durch ein mechanisch außerordentlich einfaches Transportsystem aus, das bei Umstellungen auf andere Gefäßgrößen und/oder - formen keine oder keine nennenswerten Umrüstarbeiten erfordert. Dadurch lässt sich die Inspektionsmaschine sehr kostengünstig herstellen. Allerdings kann es zweckmäßig sein, dieses Konzept nicht für Hochleistungsinspektionsmaschinen, sondern für Förderleistungen von beispielsweise maximal 8.000 Gefäßen/Stunde einzusetzen, wobei, zweckmäßig, die inspizierten Gefäße leer sein sollten.

## Patentansprüche

1. Inspektionsmaschine (M) zum Prüfen von Gefäßen (G), insbesondere Flaschen (F), mit einem Transporteur (T) zum Transportieren der Gefäße (G) entlang eines Bogenpfades (2) vorbei an zumindest einer auf der Höhe und/oder oberhalb der Gefäße dem Bogenpfad zugeordneten Inspektionseinrichtung (A1 - A4), und mit wenigstens einer unterhalb des Bogenpfads angeordneten, die Gefäße von unten nach oben beleuchtenden Beleuchtungseinrichtung (3), wobei der Transporteur (T) eine drehantreibbare Scheibe (1) aufweist, deren Oberseite (9) eine Aufstandsfläche für den Boden (15) jedes direkt darauf stehend transportierten Gefäßes (G) bildet, und die zumindest bereichsweise (10) lichtdurchlässig ausgebildet ist, wobei die Gefäße (G) mit einem Zuförderer (3) aneinander stehend an die Scheibe (1) übergeben werden, **dadurch gekennzeichnet, dass** der Transporteur (T) zusätzlich zur Scheibe (1) ein zur Scheibe koaxiales, oberhalb deren Oberseite (9) auf die Gefäße (G) einwirkendes, drehantreibbares Sternrad (7) aufweist, und dass das Sternrad (7) als Druckabbau-Sternrad mit nach außen greifenden Mitnehmern (8) ausgebildet ist, die bei der Übergabe der aneinander stehenden Gefäße (G) vom Zuförderer (3) an die Scheibe (1) zwischen die Gefäße (G) eingreifen und diese auf der Scheibe (1) voneinander separieren und separiert transportieren.

2. Inspektionsmaschine nach Anspruch 1, **dadurch gekennzeichnet, dass** die Mitnehmer (8) an den Gefäßen (G) in etwa in Höhe des Gefäßschwerpunktes oder darunter angreifen.

3. Inspektionsmaschine nach Anspruch 1, **dadurch gekennzeichnet, dass** der Außendurchmesser der Scheibe (1) größer ist als der wirksame Außendurchmesser des Sternrads (7).

4. Inspektionsmaschine nach Anspruch 1, **dadurch gekennzeichnet, dass** der Zuförderer (3) und ein Abförderer (4) um etwa 180° bezüglich der Drehachse (X) der Scheibe (1) zueinander versetzt vorgesehen sind.

5. Inspektionsmaschine nach Anspruch 3, **dadurch gekennzeichnet, dass** die Scheibe (1) bzw. der lichtdurchlässige Bereich (10) der Scheibe (1) aus Glas und/oder einem Kunststoff, wie PE, besteht.

6. Inspektionsmaschine nach Anspruch 1, **dadurch gekennzeichnet, dass** der Transporteur (T) kontinuierlich oder intermittierend drehantreibbar ist.

7. Inspektionsmaschine nach Anspruch 1, **dadurch gekennzeichnet, dass** eine Inspektionseinrichtung (A1) eine die Beleuchtung von unten nutzende Boden-Inspektionseinrichtung ist und zumindest eine oberhalb des oberen Gefäßendes platzierte Kamera (16) aufweist.

8. Inspektionsmaschine nach Anspruch 1, **dadurch gekennzeichnet, dass** eine Inspektionseinrichtung (A2, A4) eine gegebenenfalls auch die Beleuchtung von unten nutzende Gefäßinnenwand-Inspektionseinrichtung oder eine Gewindeinspektionseinrichtung oder ein Laugendetektor oder eine Mündungsdichtflächen-Inspektionseinrichtung oder eine Tragring-Inspektionseinrichtung ist.

9. Inspektionsmaschine nach Anspruch 1, **dadurch gekennzeichnet, dass** oberhalb der Scheibe (1) gegebenenfalls zusätzlich wenigstens eine obere und/oder seitliche Beleuchtungseinrichtung vorgesehen ist.

10. Inspektionsmaschine nach Anspruch 1, **dadurch gekennzeichnet, dass** zumindest entlang des Bogenpfades (2) eine Außenführung (6) für die Gefäße (G) vorgesehen ist.

11. Inspektionsmaschine nach Anspruch 1, **dadurch gekennzeichnet, dass** die Gefäße (G) mittels des Transporteurs (T) auf der Oberseite (9) der Scheibe (1) stehend relativ zur Scheibe (1) verschiebbar und/oder verdrehbar transportierbar sind.

12. Inspektionsmaschine nach Anspruch 4, **dadurch gekennzeichnet, dass** im Bereich des Abförderers (4) eine Wand-Mehrfachinspektionsstation (A3) für die vom Druckabbau-Sternrad zuvor auf der Scheibe (1) beabstandeten Gefäße (G) vorgesehen ist.

13. Inspektionsmaschine nach Anspruch 1, **gekennzeichnet durch** eine Förderleistung von maximal etwa 8.000 Gefäßen/Stunde.

## Claims

1. An inspection machine (M) for testing containers (G), in particular bottles (F), with a conveyor (T) for conveying the containers (G) along a curved path (2) past at least one inspection device (A1 to A4) associated with the curved path at the level of and/or above the containers, and with at least one illumination device (3) arranged below the curved path and illuminating the containers upwards from below, wherein the conveyor (T) has a disc (1) which is capable of being driven in a rotating manner and the top side (9) of which forms a support area for the base (15) of each container (G) conveyed standing directly thereon and which is made translucent at least locally (10), wherein the containers (G) are transferred standing adjacent to one another by an inward conveyor (3) to the disc (1), **characterized in that** in addition to the disc (1) the conveyor (T) has a star wheel (7) which is coaxial with the disc and which above the top side (9) thereof acts upon the containers (G) and is capable of being driven in a rotating manner, and the star wheel (7) is designed in the form of a pressure reduction star wheel with entrainment means (8) which engage on the outside and which during the transfer of the containers (G) standing adjacent to one another from the inward conveyor (3) to the disc (1) engage between the containers (G) and separate the latter from one another on the disc (1) and convey them separately.

2. An inspection machine according to Claim 1, **characterized in that** the entrainment means (8) engage on the containers (G) approximately at the level of the centre of gravity of the containers or thereunder.

3. An inspection machine according to Claim 1, **characterized in that** the external diameter of the disc (1) is greater than the effective external diameter of the star wheel (7).

4. An inspection machine according to Claim 1, **characterized in that** the inward conveyor (3) and an outward conveyor (4) are provided offset from each other by approximately 180° with respect to the axis of rotation (X) of the disc (1).

5. An inspection machine according to Claim 3, **characterized in that** the disc (1) or the translucent region (10) of the disc (1) consists of glass and/or a plastics material, such as PE.

6. An inspection machine according to Claim 1, **characterized in that** the conveyor (T) is capable of being driven in a rotating manner continuously or intermittently.

7. An inspection machine according to Claim 1, **characterized in that** an inspection device (A1) is a base inspection device making use of the illumination from below and has at least one camera (16) positioned above the upper end of the containers.

8. An inspection machine according to Claim 1, **characterized in that** an inspection device (A2, A4) is a container inner wall inspection device optionally also making use of the illumination from below, or a thread inspection device or a leach detector or a opening sealing face inspection device or a support ring inspection device.

9. An inspection machine according to Claim 1, **characterized in that** at least one upper and/or lateral illumination device is optionally additionally provided above the disc (1).

10. An inspection machine according to Claim 1, **characterized in that** an external guide (6) for the containers (G) is provided at least along the curved path (2).

11. An inspection machine according to Claim 1, **characterized in that** the containers (G) are capable of being conveyed in a displaceable and/or rotatable manner standing relative to the disc (1) on the top side (9) of the disc (1) by means of the conveyor (T).

12. An inspection machine according to Claim 4, **characterized in that** a wall-type multiple inspection station (A3) for the containers (G) positioned beforehand on the disc (1) at a distance from the pressure reduction star wheel is provided in the region of the outward conveyor (4).

13. An inspection machine according to Claim 1, **characterized by** a conveying capacity of a maximum of approximately 8,000 containers / hour.

## Revendications

1. Machine d'inspection (M) pour contrôler des récipients (G), en particulier des bouteilles (F), avec un transporteur (T) pour transporter les récipients (G) le long d'une trajectoire courbe (2) en les faisant passer devant au moins un dispositif d'inspection (A1-A4) associé à ladite trajectoire courbe à la hauteur et/ou au-dessus des récipients, et avec au moins un dispositif d'éclairage (B) qui est disposé au-dessous de la trajectoire courbe et qui éclaire les récipients de bas en haut, le transporteur (T) comportant une plaque (1) apte à être entraînée en rotation dont la face supérieure (9) forme une surface d'appui pour le fond (15) de chaque récipient (G) qui est transporté en étant posé à la verticale directement dessus, et qui est conçue pour laisser passer la lumière au moins par zones (10), et les récipients (G) étant transférés sur la plaque (1) à l'aide d'un dispositif d'amenée (3) en étant posés côte à côte, **caractérisé en ce que** le transporteur (T) comporte, en plus de la plaque (1), une roue en étoile (7) qui est coaxiale par rapport à la plaque, qui est apte à être entraînée en rotation et qui agit sur les récipients (G) au-dessus de la face supérieure (9) de ladite plaque, et **en ce que** la roue en étoile (7) est conçue comme une roue en étoile de suppression de pression avec des organes d'entraînement (8) qui sont dirigés vers l'extérieur et qui, lors du transfert des récipients (G) posés côte à côte du dispositif d'amenée (3) vers la plaque (1), s'avancent entre les récipients (G), les séparent les uns des autres sur la plaque (1) et les transportent séparément.

2. Machine d'inspection selon la revendication 1, **caractérisée en ce que** les organes d'entraînement (8) agissent sur les récipients (G) à peu près à la hauteur du centre de gravité de ceux-ci ou au-dessous.

3. Machine d'inspection selon la revendication 1, **caractérisée en ce que** le diamètre extérieur de la plaque (1) est plus grand que le diamètre extérieur actif de la roue en étoile (7).

4. Machine d'inspection selon la revendication 1, **caractérisée en ce que** le dispositif d'amenée (3) et un dispositif d'évacuation (4) sont décalés l'un par rapport à l'autre d'environ 180° par rapport à l'axe de rotation (X) de la plaque (1).

5. Machine d'inspection selon la revendication 3, **caractérisée en ce que** la plaque (1) ou la zone (10) de la plaque (1) qui laisse passer la lumière se compose de verre et/ou d'une matière plastique comme du PE.

6. Machine d'inspection selon la revendication 1, **caractérisée en ce que** le transporteur (T) est apte à être entraîné en rotation en continu ou par intermittence.

7. Machine d'inspection selon la revendication 1, **caractérisée en ce qu'**un dispositif d'inspection (A1) est constitué par un dispositif d'inspection de fond qui utilise l'éclairage par-dessous, et comporte au moins une caméra (16) placée au-dessus de l'extrémité supérieure des récipients.

8. Machine d'inspection selon la revendication 1, **caractérisée en ce qu'**un dispositif d'inspection (A2, A4) est constitué par un dispositif d'inspection de paroi intérieure de récipients qui utilise éventuellement lui aussi l'éclairage par-dessous, ou par un dispositif d'inspection de filetage ou un détecteur de lessive ou un dispositif d'inspection de surfaces d'étanchéité d'ouverture ou un dispositif d'inspection de bague de support.

9. Machine d'inspection selon la revendication 1, **caractérisée en ce qu'**il est prévu éventuellement en supplément, au-dessus de la plaque (1), au moins un dispositif d'éclairage supérieur et/ou latéral.

10. Machine d'inspection selon la revendication 1, **caractérisée en ce qu'**il est prévu au moins le long de la trajectoire courbe (2) un guide extérieur (6) pour les récipients (G).

11. Machine d'inspection selon la revendication 1, **caractérisée en ce que** les récipients (G) sont aptes à être transportés par translation et/ou rotation à l'aide du transporteur (T) sur la face supérieure (9) de la plaque (1) en étant posés à la verticale par rapport à ladite plaque (1).

12. Machine d'inspection selon la revendication 4, **caractérisée en ce qu'**il est prévu dans la zone du dispositif d'évacuation (4) une station d'inspection multiple de paroi (A3) pour les récipients (G) espacés préalablement par l'étoile de suppression de pression sur la plaque (1).

13. Machine d'inspection selon la revendication 1, **caractérisée par** un débit maximal d'environ 8.000 récipients/heure.
